(19) Europäisches Patentamt / European Patent Office / Office européen des brevets

(11) **EP 3 606 742 B1**

(12) **EUROPÄISCHE PATENTSCHRIFT**

(45) Veröffentlichungstag und Bekanntmachung des Hinweises auf die Patenterteilung:
**22.03.2023  Patentblatt 2023/12**

(21) Anmeldenummer: **18716975.0**

(22) Anmeldetag: **03.04.2018**

(51) Internationale Patentklassifikation (IPC):
*B32B 5/02* *(2006.01)*      *B32B 5/08* *(2006.01)*
*B32B 5/22* *(2006.01)*      *B32B 5/24* *(2006.01)*
*B32B 5/26* *(2006.01)*      *B32B 7/02* *(2006.01)*
*B32B 19/02* *(2006.01)*     *B32B 19/04* *(2006.01)*
*B32B 19/06* *(2006.01)*     *B32B 27/12* *(2006.01)*
*B32B 27/28* *(2006.01)*     *B32B 27/32* *(2006.01)*
*B32B 27/34* *(2006.01)*     *B32B 38/00* *(2006.01)*
*B32B 1/00* *(2006.01)*      *B32B 3/00* *(2006.01)*
*B32B 37/04* *(2006.01)*

(52) Gemeinsame Patentklassifikation (CPC):
**B32B 37/04; B29C 70/345; B32B 1/00;**
**B32B 5/022; B32B 5/06; B32B 5/08; B32B 5/10;**
**B32B 5/22; B32B 5/24; B32B 5/245; B32B 5/26;**
**B32B 7/02; B32B 27/12; B32B 27/281;**
**B32B 27/285;**                           (Forts.)

(86) Internationale Anmeldenummer:
**PCT/EP2018/058473**

(87) Internationale Veröffentlichungsnummer:
**WO 2018/185090 (11.10.2018 Gazette 2018/41)**

(54) **VERFAHREN ZUR HERSTELLUNG EINES FLÄCHIGEN VERBUNDBAUTEILS UND DAMIT HERGESTELLTES VERBUNDBAUTEIL**

METHOD OF FORMING A FLAT COMPOSITE COMPONENT AND COMPOSITE COMPONENT PRODUCED IN THIS WAY

PROCÉDÉ DE FABRICATION D'UN ÉLÉMENT STRUCTURAL COMPOSITE PLAT ET ÉLÉMENT STRUCTURAL COMPOSITE AINSI PRODUIT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2017  EP 17164504**

(43) Veröffentlichungstag der Anmeldung:
**12.02.2020  Patentblatt 2020/07**

(73) Patentinhaber: **Quadrant Plastic Composites AG**
**5600 Lenzburg (CH)**

(72) Erfinder: **BASER, Burak**
**CH-4663 Aarburg (CH)**

(74) Vertreter: **Schmauder & Partner AG**
**Patent- & Markenanwälte VSP**
**Zwängiweg 7**
**8038 Zürich (CH)**

(56) Entgegenhaltungen:
**EP-A1- 1 714 772      EP-A1- 2 636 783**
**WO-A1-2006/105682     WO-A1-2006/133586**
**DE-A1- 19 520 477**

(52) Gemeinsame Patentklassifikation (CPC): (Forts.)
**B32B 27/286; B32B 27/288; B32B 27/32;
B32B 27/34; B32B 37/10;** B32B 2250/03;
B32B 2250/04; B32B 2250/05; B32B 2250/20;
B32B 2250/22; B32B 2250/24; B32B 2250/40;
B32B 2260/021; B32B 2260/023; B32B 2260/048;
B32B 2262/02; B32B 2262/0269; B32B 2262/10;
B32B 2262/101; B32B 2262/106; B32B 2307/54;
B32B 2307/718; B32B 2307/72; B32B 2309/02;
B32B 2419/00; B32B 2605/08; B32B 2605/18

**Beschreibung**

Technisches Gebiet

Die vorliegende Erfindung betrifft ein Verfahren zur Herstellung eines flächigen Verbundbauteils mit einer zwischen zwei Deckschichten angeordneten und stoffschlüssig damit verbundenen Kernschicht. Zudem betrifft die Erfindung eine Verwendung eines mit dem erfindungsgemässen Verfahren hergestellten flächigen Verbundbauteils.

Stand der Technik

Verbundbauteile aus faserverstärkten Thermoplasten werden in zunehmendem Mass als Formteile in verschiedenen Bereichen der Technik eingesetzt.

Beispielsweise beschreibt die WO 2015/117799A1 ein Verbundbauteil mit einem Schaumkern, auf dessen Oberfläche beidseitig eine stoffschlüssig mit dem Schaumkern verbundene Deckschicht angeordnet ist. Zur Herstellung des Verbundbauteils werden die Deckschichten und der Schaumkern erwärmt, danach werden die Deckschichten auf den Oberflächen des Schaumkerns positioniert und das Ganze in eine Presse oder Form gebracht, die das fertige Verbundbauteil abbildet. Das Erwärmen kann auch erst in der Form erfolgen. Anschliessend werden Schaumkern und Deckschichten umgeformt und nach einer bestimmten Umformzeit wieder abgekühlt, wobei eine stoffschlüssige Verbindung zwischen Schaumkern und Deckschichten gebildet wird. Als Deckschichten werden einerseits metallische Deckschichten, insbesondere aus Aluminium beschrieben. Alternativ werden auch Deckschichten aus faserverstärktem Kunststoff beschrieben. Dadurch, dass während des Umformschrittes die Deckschichten auf den Oberflächen des Schaumkerns verschoben werden können, erweist sich das beschriebene Verfahren insbesondere für die Herstellung nicht-planarer Verbundbauteile mit komplexer Form als vorteilhaft.

Ein gattungsgemässes Verbundbauteil und ein Verfahren zu dessen Herstellung sind in der WO 2006/133586 A1 beschrieben. Diese betrifft eine biegesteife Verbundplatte, umfassend:

A. eine oder zwei Deckschichten mit einer Dicke von 0,5 bis 5 mm aus glasfaserverstärktem Polypropylen mit einem Glasgehalt von 20 bis 60 Gew.% und einem Gehalt an Luftporen von weniger als 5 Vol.%, und
B. eine Kernschicht mit einer Dicke von 2 bis 40 mm aus glasfaserverstärktem Polypropylen mit einem Glasgehalt von 35 bis 80 Gew.% und einem Gehalt an Luftporen von 20 bis 80 Vol.%.

Im beschriebenen Herstellungsverfahren wird die verwendete Kernschicht als poröse Platte bereitgestellt, wobei diese, wie beispielsweise in der WO 2006/105682 A1 beschrieben, durch trockenes Vermischen von Polypropylenfasern und Glasfasern, Vernadeln des Mischvlieses und Heissverpressen hergestellt werden kann. Als Deckschichten werden herkömmliche Glasfasermatten-Thermoplast-Platten (üblicherweise als "GMT-Platten" bezeichnet) bereitgestellt. Die Verstärkungsfasern der Deckschichten wie auch der Kernschichten werden bereits vor der Herstellung des biegesteifen Verbundplatte durch einen vorgelagerten Aufheiz- und Pressprozess mit Thermoplasten imprägniert und in der Folge als biegesteife Plattenelemente zwischengelagert. Zur Herstellung der eigentlichen Verbundplatte werden dann die zu verpressenden Schichten in Form von Platten vorgelegt, in einer Presse aufeinander gestapelt und bei Temperaturen zwischen 180 und 220 °C während 5 bis 50 min verpresst. Die beschriebenen Verbundplatten werden insbesondere als Trennwände und Schalungselemente im Bauwesen, aber auch im Möbelbau als Ersatz für Spanplatten eingesetzt.

Zur Herstellung eines biegesteifen Verbundbauteils mit dem oben beschriebenen Verfahren, bei welchem die Deck- und Kernschichten als bereits konsolidierte und steife Platten bereitgestellt werden, sind insgesamt neun Prozessschritte erforderlich, nämlich:

- Bereitstellung der Kernschicht(en): 1) Vliesstoffherstellung, 2) Imprägnation der Verstärkungsfasern in einer Heizpresse (unter Druck & Temperatur), 3) Konsolidierung in einer Kühlpresse;
- Bereitstellung der Deckschichten: 1) Mattenherstellung, 2) Extrusion, 3) Imprägnation in einer Heizpresse, 4) Konsolidierung in einer Kühlpresse;
- Herstellung der Verbundplatte: 1) Aufheizen der Decklagen und Kernlagen in einer Heizpresse, 2) Abkühlen der Deck- & Kernlagen.

Die DE 195 20 477 A1 beschreibt faserverstärkte GMT-Platten, die aufgrund der Rückstellkräfte der Glasmatten beim Erhitzen expandieren und in ungleichmässiger Verteilung Luftblasen enthalten. Zur Herstellung dieser GMT-Platten wird vorerst entsprechende Glasmatten produziert werden. Anschliessend werden die Glasmatten mit schichtweise extrudierter Polypropylenschmelze bzw. mit Polypropylenfolien in einer Heizpresse imprägniert und anschliessend in einer Kühlpresse konsolidiert Die so hergestellten GMT Platten werden nach dem Konsolidieren bei Bedarf erneut erwärmt, um die gewünschte Expansion zu bewirken. Die expandierten GMT-Platten können als Stützkern zusammen mit Deckschichten zu einem Sandwich-Formteil verpresst werden. Das in der DE 195 20 477 A1 beschriebene Herstellungsverfahren beruht auf dem thermischen Verpressen eines auf Raumtemperatur abgekühlten und demzufolge erstarrten Stützkerns zusammen mit äusseren Schichten in Form von nicht expandierten GMT-Folien.

Zur Herstellung eines biegesteifen Verbundbauteils mit dem Verfahren der DE 195 20 477 A1 sind sogar zwölf Prozessschritte erforderlich, nämlich:

- Bereitstellung der Kernschicht(en): 1) Mattenherstellung, 2) Extrusion der Schmelzeschicht auf Matten, 3) Imprägnation der Verstärkungsfasern in einer Heizpresse (unter Druck & Temperatur), 4) Konsolidierung in einer Kühlpresse, 5) Aufheizung der konsolidierten Kernschichten, sodass sie expandieren, 6) Abkühlung der Kernschichten;
- Bereitstellung der Deckschicht(en): 1) Mattenherstellung, 2) Extrusion, 3) Imprägnation in einer Heizpresse, 4) Konsolidierung in einer Kühlpresse;
- Herstellung der Verbundplatte: 1) Aufheizen der Deckschichten, 2) Verpressen der Deckschichten mit kalter Kernschicht; deshalb ist die Herstellung auf flache Platten beschränkt, für 3D Teile müssten die Kerne vorgängig in einem weiteren Schritt entsprechend umgeformt und anschliessend mit Decklagen verpresst werden.

Nach wie vor besteht somit ein erheblicher Bedarf für weitere, insbesondere auch biegesteife, flächige und nach Bedarf dreidimensional geformte Verbundbauteile bzw. für entsprechende, einfache und wirtschaftliche Herstellungsverfahren. Insbesondere sind Verfahren zur Herstellung von Verbundbauteilen erwünscht, deren Eigenschaften für bestimmte Anwendungen deutlich verbessert sind.

Darstellung der Erfindung

Eine Aufgabe der Erfindung ist es demnach, ein Verfahren zur Herstellung eines flächigen Verbundbauteils anzugeben. Eine weitere Aufgabe der Erfindung besteht in der Angabe von Verwendungszwecken der erfindungsgemäss hergestellten flächigen Verbundbauteile.

Gelöst werden diese Aufgaben durch das im Anspruch 1 definierte Herstellungsverfahren sowie durch die im Anspruch 15 definierten Verwendungen desselben.

Vorteilhafte Ausgestaltungen der Erfindung sind nachfolgend beschrieben und in den abhängigen Ansprüchen definiert.

Das erfindungsgemässe Verfahren zur Herstellung eines flächigen Verbundbauteils mit einer zwischen zwei Deckschichten (A, A') angeordneten und stoffschlüssig damit verbundenen Kernschicht (B), wobei die Deckschichten einen Deckschicht-Thermoplasten enthalten und wobei die Kernschicht einen Kernschicht-Thermoplasten enthält, umfasst die folgenden Schritte:

a) es werden entsprechende Zuschnitte der beiden Deckschichten und der Kernschicht bereitgestellt und daraus ein auf eine Temperatur oberhalb der Schmelztemperatur sowohl des Deckschicht-Thermoplasten wie auch des Kernschicht-Thermoplasten aufgeheizter Stapel der Schichtenfolge A-B-A' gebildet;
b) der aufgeheizte Stapel (A-B-A') wird verpresst;
c) der verpresste Stapel wird abgekühlt, wobei das flächige Verbundbauteil mit konsolidierten und stoffschlüssig miteinander verbundenen Schichten gebildet wird.

Dadurch, dass

- im Schritt a) die anfänglich bereitgestellten Zuschnitte der beiden Deckschichten (A, A') in unkonsolidierter flexibler Form vorgelegt werden, wobei mindestens eine Deckschicht (A) eine unkonsolidierte flexible Faservliesstoffschicht (C) aus 10 bis 100 Gew.% Thermoplastfasern des Deckschicht-Thermoplasten und 0 bis 90 Gew.% Verstärkungsfasern umfasst, welche ein Flächengewicht von 300 bis 3'000 g/m$^2$ aufweist, und dass
- im Schritt a) die anfänglich bereitgestellten Zuschnitte der Kernschicht (B) mindestens eine aus Verstärkungsfasern und Thermoplastfasern des Kernschicht-Thermoplasten gebildete Wirrfaservliesstoffschicht (D) umfassen, welche ein Flächengewicht von 500 bis 10'000 g/m$^2$ aufweist, und dass
- nach dem Schritt c) die konsolidierte(n) Deckschicht(en) einen Luftporengehalt < 5 Vol.-% und die konsolidierte Kernschicht einen Luftporengehalt von 20 bis 80 Vol-% aufweisen,

ergeben sich aus dem erfindungsgemässen Verfahren verschiedene Vorteile. Insbesondere erlaubt das erfindungsgemässe Verfahren auch die Herstellung von spezifisch geformten, nicht-ebenen flächigen Bauteilen (auch "3D-Bauteile" genannt). Durch die hohe Drapierbarkeit der bereitgestellten Deck- und Kernschicht mit flexiblen Lagen von Faservliesstoffen können zudem hohe Umformgrade erzielt werden

Darüber hinaus lässt sich das erfindungsgemässe Verfahren in prozessökonomischer Weise, d.h. mit vorteilhaft kurzer Prozessdauer und/oder mit vergleichsweise geringem Energiebedarf, implementieren. Beim erfindungsgemässen Verfahren findet die Thermoplast-Imprägnation der Verstärkungsfasern erst bei der Bauteilherstellung. Demzufolge sind im Vergleich zur WO 2006/133586 A1 und DE 195 20 477 A1 deutlich weniger Prozessschritte erforderlich, nämlich nur drei:

- Bereitstellung der Kernlagen: 1) Herstellung des Wirrfaservliesstoffes;
- Bereitstellung der Decklagen: 1) Faservliesstoffherstellung, vorzugsweise mit Gewebe;
- Herstellung des Verbundbauteils: 1) Aufheizen und Abkühlen im variothermen Presswerkzeug (in einem Schritt).

Die herstellbaren flächigen Verbundbauteile werden aufgrund ihrer Schichtanordnung auch als "Sandwich-Bauteile" bezeichnet. Solche Bauteile können als ebene oder gebogene Platten, aber auch als Bauteile mit unterschiedlichen Dicken und Verformungsgraden ausgebildet sein.

Der Begriff "entsprechende Zuschnitte" ist im vorliegenden Zusammenhang hinsichtlich der Abmessungen des herzustellenden Verbundbauteils zu verstehen. Ein "entsprechender Zuschnitt" des Materials für eine der Deckschichten wird also im Wesentlichen die Länge und Breite des Verbundbauteils aufweisen. Bei einem "entsprechenden Zuschnitt" des Materials für die Kernschicht wird dies ebenfalls zutreffen, wobei allerdings noch die in gewissen Ausführungsformen vorgesehenen zusätzlichen Strukturschichten zu berücksichtigen bzw. bereits mit einzulegen sind. Ferner setzt die Bezeichnung "Zuschnitt" nicht zwangsläufig eine einstückige Bereitstellung voraus.

Im vorliegenden Zusammenhang ist der Begriff "anfänglich bereitgestellt" insbesondere im Hinblick auf den Schritt a) zu sehen. Der besagte Schritt a) führt ausgehend von den anfänglich bereitgestellten Materialien zu einem aufgeheizten Stapel A-B-A', wobei dies grundsätzlich auf verschiedene Arten realisiert werden kann, wie später noch erläutert wird.

Der Begriff "konsolidiert" ist im Zusammenhang mit dem erfindungsgemäss vorgesehenen Verpressungsschritt zu sehen. Demnach ist "konsolidiert" nicht zwangsläufig als "vollkonsolidiert" bzw. "porenlos" zu verstehen, sondern als Zustand, der sich infolge des Verpressens in heissem Zustand ergibt.

Demgegenüber ist der Begriff "in unkonsolidierter Form" als Referenzzustand für Ausgangsmaterialien zu verstehen, in welchen noch keine wesentliche Bildung einer Thermoplastmatrix stattgefunden hat.

Die Begriffe "Deckschicht-Thermoplast" und "Kernschicht-Thermoplast" sind grundsätzlich als Angabe desjenigen Thermoplasten zu verstehen, aus dem die in den betreffenden Schichten vorhandenen Thermoplastfasern gebildet sind. Dies setzt nicht zwangsläufig voraus, dass die Thermoplastfasern in einer gegebenen Schicht nur aus einem Thermoplastmaterial gebildet sein müssen. Insbesondere können auch Mischfasern aus unterschiedlichen, aber kompatiblen Thermoplasten zum Einsatz kommen. Als "kompatibel" werden Thermoplasten verstanden, die eine stoffschlüssige Verbindung erlauben. Ebenso ist nicht ausgeschlossen, dass in den beiden Deckschichten A und A' zwei unterschiedliche Deckschicht-Thermoplasten verwendet werden.

Es versteht sich, dass im Hinblick auf das Verpressen gemäss Schritt b) der Begriff "aufgeheizt" dahingehend zu verstehen ist, dass eine zur thermoplastischen Umformung geeignete Temperatur vorliegt. Demnach sollen also alle zur Umformung vorgesehenen Thermoplastbereiche auf einer etwas oberhalb der jeweiligen Thermoplast-Schmelztemperatur aufgeheizt werden.

Je nach verwendetem Thermoplastmaterial erfolgt das Verpressen bei Temperaturen im Bereich von ca. 180ºC (beispielsweise bei Verwendung von Polypropylen) bis ca. 400ºC (beispielsweise bei Verwendung von PEEK) und bei Drücken von 0.5 bis 5 bar. Die Verarbeitung erfolgt variotherm (aufheizen und pressen im gleichen Werkzeug) oder durch vorgängiges aufheizen im Kontakt-, IR- bzw. Umluftofen und anschliessendem Pressen im Werkzeug Erfindungsgemäss werden die anfänglich bereitgestellten Zuschnitte der beiden Deckschichten (A, A') in unkonsolidierter flexibler Form vorgelegt. Die anfänglich bereitgestellten Zuschnitte der mindestens einen Deckschicht (A) umfassen eine unkonsolidierte flexible Faservliesstoffschicht (C) aus 10 bis 100 Gew.% Thermoplastfasern des Deckschicht-Thermoplasten und 0 bis 90 Gew.% Verstärkungsfasern, wobei die Faservliesstoffschicht (C) als Ganzes ein Flächengewicht von 300 bis 3'000 g/m$^2$ aufweist. Sofern dies nur für eine der beiden Schichten A und A' zutrifft, wird diese ohne Einschränkung der Allgemeinheit als die Schicht A definiert. In diesem zuletzt genannten Fall umfasst die weitere Schicht A' beispielsweise ein Thermoplastfasern und gegebenenfalls Verstärkungsfasern enthaltendes Gebilde, das ebenfalls in unkonsolidierter flexibler Form vorgelegt wird.

Im Gegensatz zu den bei der WO 2015/117799 A1 verwendeten Schaumkernen umfasst die erfindungsgemässe Kernschicht (B) in unkonsolidierter Form mindestens eine aus Verstärkungsfasern und Thermoplastfasern gebildete Wirrfaservliesstoffschicht (D). Derartige Schichten werden auch als "Nonwovens" bezeichnet.

Weiterhin ist erfindungsgemäss vorgesehen, dass nach dem Verpressen die konsolidierte(n) Deckschicht(en) einen Luftporengehalt < 5 Vol.-% und die konsolidierte Kernschicht einen Luftporengehalt von 20 bis 80 Vol.-% aufweisen. Damit ergeben sich Bauteile mit einer widerstandsfähigen, vergleichsweise harten und steifen Aussenschicht und einer voluminösen, schall- und wärmeisolierenden Innenschicht mit vergleichsweise geringer Dichte. Dementsprechend sind die Bauteile für eine gegebene Steifheit vergleichsweise leicht.

Die oben erwähnte Struktur ergibt sich in wesentlichem Mass dadurch, dass beim Verpressen des zuvor bereitgestellten aufgeheizten Stapels der Konsolidierungsvorgang anfänglich vornehmlich in den randnahen Schichten A und ggf. A' abläuft, während im Bereich der Kernschicht aufgrund von Rückstellkräften der Wirrfaserschicht eine weniger weitgehende Konsolidierung stattfindet.

Im verpressten Bauteil haben die Deckschichten eine Dicke von 0.1mm bis 10mm, während die Kernschichte eine Dicke von 0.5mm bis 50mm aufweist. Die Deckschichten und Kernschichten aus Nonwovens haben vorzugsweise die gleiche bzw. kompatible Matrix, so dass die Haftung stoffschlüssig und ohne zusätzlichen Klebefolien bzw. Kleber erfolgt.

Die in der Kernschicht verwendeten Wirrfaservliesstoffschichten aus Thermoplastfasern als Matrix und optional Verstärkungsfasern haben den Vorteil, dass sie flexibel sind und eine erheblich grössere Dicke (4x bis 8x, ggf. sogar bis 10x) als die finale Dicke im verpressten Bauteil haben können. Bei der Sandwichherstellung wird die Kernschicht aus Nonwovens auf die finale Dicke komprimiert. Im Gegensatz zu Schaumstoffen besteht beim erfindungsgemässen Verfahren kein Risiko, dass der Kern aus Nonwoven unter Temperatur- und Druckbeaufschlagung kollabiert und dadurch die erforderlichen Dicken nicht erzielt werden können. Dies wird dadurch erreicht, dass die Verstärkungsfasern der Nonwovens beim Pressvorgang unter Druck und Temperatur einen Widerstand in z-Richtung (d.h. senkrecht zur Schichtebene) ausüben, der sich als "Expansionskraft" äussert. Durch die ständig vorhandene "Expansionskraft" während des gesamten Pressvorgangs können Dicken bis zu 4x Fache der vollkonsolidierten Dicke (ohne zu kollabieren) erreicht werden.

Bei einer vorteilhaften Ausführungsform (Anspruch 2) ist die im Schritt a) bereitgestellte Wirrfaservliesstoffschicht (D) der Kernschicht (B) genadelt. Dadurch wird der fachsprachlich auch als "Loft" bezeichnete Rückstelleffekt in z-Richtung noch verstärkt. Dabei können die Expansionskräfte der Fasern je nach Fasergehalt, Faserlänge und Vernadelungsparameter beeinflusst werden.

Grundsätzlich steht für das erfindungsgemässe Verfahren, eine ganze Reihe von erprobten Thermoplasten zur Verfügung, deren Auswahl im Bereich des Fachwissens liegt. Gemäss einer vorteilhaften Ausführungsform (Anspruch 3) sind der Deckschicht-Thermoplast und der Kernschicht-Thermoplast unabhängig ausgewählt aus Polypropylen (PP), Polyetherimid (PEI), Polyetheretherketon (PEEK), Polyphenylensulfid (PPS), Polyamid (PA), Polyaryletherketon (PAEK), Polyetherketonketon (PEKK) und Polycarbonat (PC).

Auch für die Auswahl der Verstärkungsfasern steht eine ganze Reihe von erprobten Fasermaterialien zur Verfügung. Gemäss einer vorteilhaften Ausführungsform (Anspruch 4) sind die Verstärkungsfasern ausgewählt aus Carbonfasern, Glasfasern, Aramidfasern, Basaltfasern und hochschmelzenden Thermoplastfasern. Unter dem Begriff "hochschmelzende Thermoplastfasern" sind Fasern aus einem Thermoplasten mit einem oberhalb der im erfindungsgemässen Heiz- und Pressvorgang verwendeten Arbeitstemperaturen liegenden Schmelzpunkt.

Es versteht sich, dass die Auswahl der Thermoplasten wie auch der Fasermaterialien, und entsprechend auch die Kombination von Thermoplast und Fasermaterial stark durch den Anwendungsbereich des herzustellenden Bauteils geprägt sind.

Gemäss einer vorteilhaften Ausführungsform des Verfahrens (Anspruch 5) werden im Schritt a) die bereitgestellten Zuschnitte der beiden Deckschichten (A, A') und der Kernschicht (B) in kaltem Zustand mit der Schichtenfolge A-B-A' aufeinandergestapelt und der so gebildete Stapel (A-B-A') auf eine Temperatur oberhalb der Schmelztemperatur sowohl des Deckschicht-Thermoplasten wie auch des Kernschicht-Thermoplasten aufgeheizt. Bei dieser Ausführungsform wird also ausgehend von kalten Zuschnitten zunächst der Stapel A-B-A' aufgebaut und gesamthaft aufgeheizt. Anschliessend wird der aufgeheizte Stapel im Schritt b) in einem Presswerkzeug verpresst und im Schritt c) abgekühlt. Die Form des Presswerkzeugs wird je nach gewünschter Form des herzustellenden Bauteils gewählt. Für diese Ausführungsform müssen Deckschicht-Thermoplast und Kernschicht-Thermoplast miteinander kompatibel sein, damit deren thermoplastische Verformung in einem geeigneten Temperaturbereich gleichzeitig möglich ist. Zur Durchführung des Verfahrens kann beispielsweise eine kombinierte Heiz-, Press- und Kühlstation verwendet werden (sog. Variotherm-Prozess). Es ist aber auch möglich, den Aufheizprozess in einer eigenständigen Kontakt-Heizstation durchzuführen und das anschliessende Pressen und Kühlen in einer nachgelagerten Pressvorrichtung. Gemäss einer vorteilhaften Weiterbildung dieses Verfahrens (Anspruch 6) sind der Deckschicht-Thermoplast und der Kernschicht-Thermoplast identisch. Dadurch lässt sich die Haftung der einzelnen Schichten aneinander stoffschlüssig und ohne zusätzliche Klebefolien bzw. Kleber bewerkstelligen.

Eine seit langem bewährte, kostengünstige und verlässliche Materialkombination beruht auf Polypropylen als Thermoplast und Glas als Material der Verstärkungsfasern. Als höherwertige Materialkombination mit mechanisch hervorragenden Eigenschaften und vergleichsweise geringem Gewicht bieten sich PEEK oder PEI als Thermoplast und Carbonfasern als Material der Verstärkungsfasern. Carbonfasern bieten auch den Vorteil einer stärkeren Rückstellkraft, d.h. eines stärkeren Loft-Effektes, was die Herstellung von Bauteilen mit hoch porösen Kernschichten begünstigt.

Gemäss einer anderen vorteilhaften Ausführungsform des Verfahrens (Anspruch 7) werden im Schritt a) die Zuschnitte der Kernschicht (B) sowie der beiden Deckschichten (A, A') unabhängig voneinander auf eine Temperatur oberhalb der Schmelztemperatur des betreffenden Thermoplasten aufgeheizt und danach in aufgeheizter Form mit der Schichtenfolge A-B-A' aufeinandergestapelt. Auch in diesem Fall wird ein aufgeheizter Stapel (A-B-A') gebildet. Aufgrund der unabhängigen Aufheizvorgänge können die verschiedenen Schichten auf unterschiedliche Temperatur aufgeheizt werden, was insbesondere bei Verwendung unterschiedlicher Kernschicht- und Deckschicht-Thermoplasten erforderlich sein kann.

Es versteht sich, dass bei sämtlichen Ausführungsformen das Verpressen des aufgeheizten Stapels zeitnah durchgeführt werden muss, d.h. es darf keine vorzeitige Erstarrung des Thermoplasten stattfinden. Dementsprechend ist es bei der zuletzt genannten Ausführungsform bevorzugt, für das unabhängige Aufheizen der Deckschichten und der Kernschicht eigene Heizstationen vorzusehen, um einen Parallelbetrieb zu ermöglichen.

Gemäss einer vorteilhaften Ausführungsform (Anspruch 8) weist die mindestens eine Deckschicht (A) in unkonsolidierter Form eine mit der Faservliesstoffschicht (C) vernadelte, vernähte oder thermisch verbundene Gewebe- oder Gelegeschicht (E) aus Verstärkungsfasern mit einem Flächengewicht von 100 bis 2'000 g/m$^2$ auf. Derartige Schicht-stoffe sind in der WO 2006/111037 A1 beschrieben worden und sind beispielsweise unter der Bezeichnung "Q-Tex" bekannt. Gemäss einer vorteilhaften Weiterbildung dieses Verfahrens (Anspruch 9) weist die mindestens eine Deckschicht (A) mehrere Gewebe- oder Gelegeschichten (E1, E2, etc.) aus unterschiedlichen Verstärkungsfasermaterialien auf. Beispielsweise kann eine erste Schicht mit Carbonfasern, eine zweite Schicht mit Aramidfasern und eine dritte Schicht mit Glasfasern ausgestattet sein. Die Deckschichten können auch aus mehreren Lagen mit unterschiedlicher Orientierung aufgebaut sein, um einen belastungsgerechten Aufbau bezüglich Steifigkeit und Duktilität zu erzielen. Beispielsweise kann je ein Glasfaser Gelege mit Orientierung +45° bzw. +45° und eine weitere Lage mit unidirektionalen Glasfasern vorgesehen werden.

Gemäss einer weiteren vorteilhaften Ausführungsform (Anspruch 10) weist die Kernschicht (B) in unkonsolidierter Form mindestens eine weitere, an die Wirrfaservliesstoffschicht (D) angrenzende Strukturschicht (F) auf, wobei es sich insbesondere um eine weitere Wirrfaservliesstoffschicht mit unterschiedlichem Verstärkungsfaseranteil oder aber um eine Bienenwaben- oder Schaumstoffschicht handeln kann. In manchen Ausführungsvarianten ist die Strukturschicht aus einem Thermoplasten, insbesondere aus dem Kernschicht-Thermoplasten gebildet. Gemäss einer Weiterbildung (Anspruch 11) ist die Strukturschicht (F) nur in ausgewählten Regionen der Kernschicht vorgesehen. In anderen Ausführungsformen werden Strukturschichten aus Materialien mit höherem Schmelzpunkt wie beispielsweise Aluminium oder Nomex® verwendet.

Mit den vorgenannten Massnahmen, die einzelnen oder in Kombination implementierbar sind, lässt sich eine erhebliche, massgeschneiderte Variation der lokalen Eigenschaften des Bauteils erreichen.

Gemäss einer vorteilhaften Ausführungsform des Verfahrens (Anspruch 12) wird das Verpressen des aufgeheizten Stapels in einem nicht-planaren Presswerkzeug durchgeführt. Damit lassen sich 3-dimensional strukturierte flächige Verbundbauteile unterschiedlichster Art herstellen.

Mit dem erfindungsgemässen Verfahren lässt sich generell ein flächiges Verbundbauteil mit einer zwischen zwei Deckschichten (A, A') angeordneten und stoffschlüssig damit verbundenen Kernschicht (B), wobei das Verbundbauteil mit dem erfindungsgemässen Verfahren hergestellt ist. Gemäss einer vorteilhaften Ausgestaltung (Anspruch 13) wird als Deckschicht-Thermoplast und als Kernschicht-Thermoplast übereinstimmend PEEK verwendet, und bei den Verstärkungsfasern handelt es sich um Carbonfasern, wobei die konsolidierten

Deckschichten (A, A') eine Dichte von 1.0 bis 2.0 g/cm$^3$, insbesondere von 1.3 bis 1.8 g/cm$^3$, aufweisen und die konsolidierte Kernschicht (B) eine Dichte von 0.2 bis 1.0 g/cm$^3$, insbesondere von 0.3 bis 0.6 g/cm$^3$, aufweist. Gemäss einer weiteren Ausgestaltung (Anspruch 14) wird als Deckschicht-Thermoplast und als Kernschicht-Thermoplast übereinstimmend PEI verwendet.

Die erfindungsgemäss hergestellten flächigen Verbundteile haben mannigfache Anwendungsbereiche. Gemäss einem Aspekt der Erfindung (Anspruch 15) werden sie in der Luftfahrt oder im Fahrzeugbau verwendet.

## Kurze Beschreibung der Zeichnungen

Ausführungsbeispiele der Erfindung werden nachfolgend anhand der Zeichnungen näher beschrieben, dabei zeigen:

Fig. 1      ein erstes flächiges Verbundbauteil, in schematischer, perspektivischer Darstellung;

Fig. 2      eine Ausgestaltung einer unkonsolidierten Decklage, in einer schematischen Schnittdarstellung;

Fig. 3      ein zweites flächiges Verbundbauteil, in schematischer, perspektivischer Darstellung;

Fig. 4      ein drittes flächiges Verbundbauteil, in schematischer, perspektivischer Darstellung;

Fig. 5      ein viertes flächiges Verbundbauteil, in schematischer, perspektivischer Darstellung;

Fig. 6    eine kombinierte Heiz-, Press- und Kühlvorrichtung zur Verarbeitung eines Schichtstapels, in schematischer, perspektivischer Darstellung;

Fig. 7    eine Vorrichtung mit Heizstation und nachgelagerter Press- und Kühlvorrichtung zur Verarbeitung eines Schichtstapels, in schematischer, perspektivischer Darstellung; und

Fig. 8    eine Vorrichtung mit separaten Heizstationen für einzelne Schichten und einer nachgelagerten Press- und Kühlvorrichtung zur Verarbeitung eines Schichtstapels, in schematischer, perspektivischer Darstellung.

Wege zur Ausführung der Erfindung

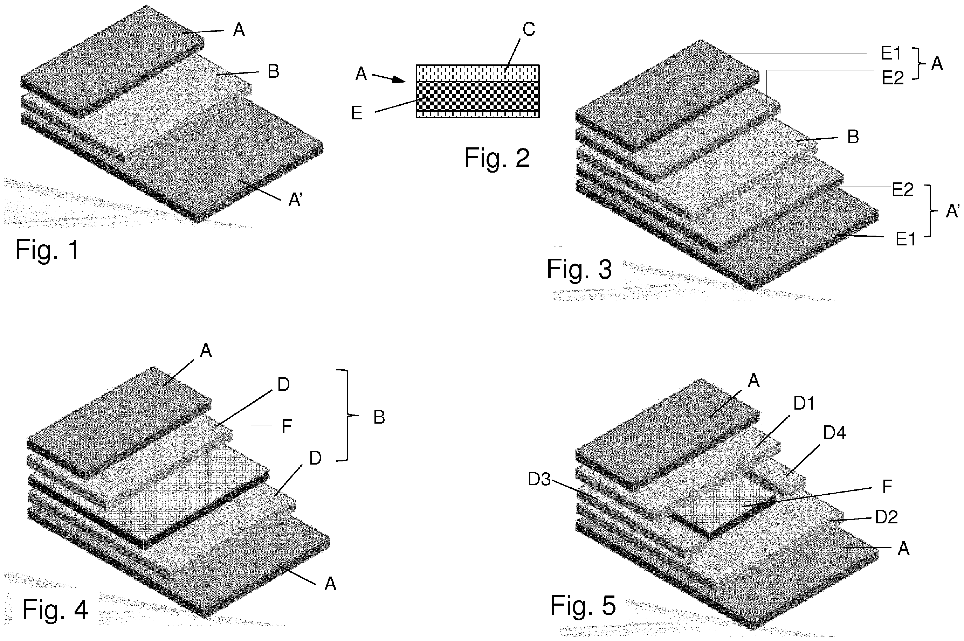

Die in den Fig. 1 bis 5 dargestellten flächigen Verbundbauteile sind lediglich zur Verdeutlichung der Schichtenstruktur mit in Längsrichtung versetzten Schichten dargestellt. Demgegenüber sind bei der praktischen Verwendung die einzelnen Schichtkanten in aller Regel bündig. Ferner sollen die Fig. 1 bis 5 lediglich die grundsätzliche Schichtenstruktur und nicht die relativen Dicken der Schichten darstellen. Dementsprechend sind die in den Fig. 1 bis 5 gezeigten Anordnungen grundsätzlich sowohl für die jeweils bereitgestellten Schichtenstapel wie auch für die nach dem Pressvorgang entstandenen Verbundbauteile zutreffend.

Das in der Fig. 1 dargestellte Verbundbauteil weist eine zwischen zwei Deckschichten A und A' angeordnete Kernschicht B auf.

Eine mögliche Ausgestaltung der Deckschicht A ist in der Fig. 2 veranschaulicht. Diese umfasst in der anfänglich bereitgestellten Form eine Faservliesstoffschicht C sowie eine damit vernadelte Gewebeschicht E aus Verstärkungsfasern. Eine solche Schicht kann beispielsweise durch Aneinanderlegen und Vernadeln der Schichten C und E hergestellt werden, wobei beim Vernadeln ein Teil der Vliesfasern C durch die Verstärkungsfaserschicht E hindurchgestossen wird. Dementsprechend ist die Verstärkungsfaserschicht E auf beiden Seiten von Vliesfasern C umgeben.

Bei dem in der Fig. 3 dargestellten Verbundbauteil ist jede der beiden Deckschichten A und A' aus zwei Gewebeschichten E1 und E2 mit unterschiedlichen Verstärkungsfasermaterialien gebildet.

Bei dem in der Fig. 4 dargestellten Verbundbauteil weist die Kernschicht B in unkonsolidierter Form beidseitig eine im Inneren der Wirrfaservliesstoffschicht D angeordnete Strukturschicht F in Form einer Bienenwabenpatte bzw. einer Wirrfaserschicht mit unterschiedlichem Verstärkungsfaseranteil auf. Im gezeigten Beispiel ist die Strukturschicht vollflächig ausgebildet und ist demnach sandwichartig zwischen zwei Wirrfaserschichten eingebettet.

Bei dem in der Fig. 5 dargestellten Verbundbauteil ist die Strukturschicht F nur in ausgewählten Regionen der Kernschicht B vorhanden. Wie aus der Fig. 5 ersichtlich, ist im gezeigten Beispiel des Strukturschicht F als mittiger Streifen im Inneren der Kernschicht B angeordnet und ist zwischen je einer oberen und unteren Wirrfaservliesstoffschicht D1 und D2 und zwischen je einer seitlichen Wirrfaservliesstoffschicht D3 und D4 eingebettet.

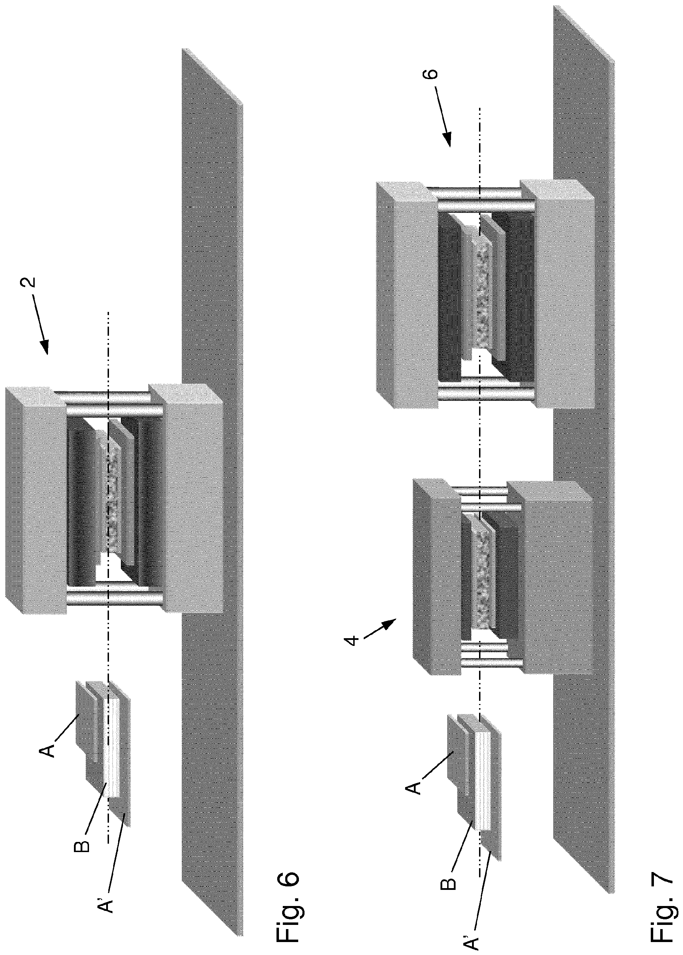

Bei einer Ausführungsform des Herstellungsverfahrens wird wie in der Fig. 6 veranschaulicht ein vorgängig bereitgestellter kalter Schichtstapel A-B-A' in eine kombinierte Heiz-, Press- und Kühlvorrichtung 2 eingeführt und dort aufgeheizt und zu einem flächigen Verbundbauteil verpresst.

Bei einer weiteren Ausführungsform wird wie in der Fig. 7 veranschaulicht ein vorgängig bereitgestellter flexibler kalter Schichtstapel A-B-A' in eine Kontakt-Heizvorrichtung 4 eingeführt und dort aufgeheizt. Der so gebildete aufgeheizte Schichtstapel wird anschliessend in einer Pressvorrichtung 6 zu einem flächigen Verbundbauteil verpresst.

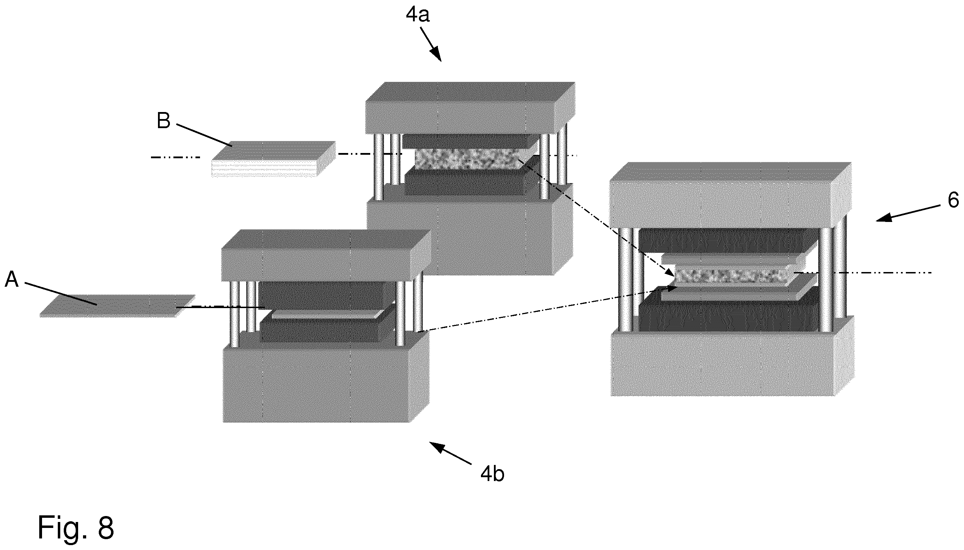

Bei noch einer weiteren Ausführungsform wird wie in der Fig. 8 veranschaulicht eine Kernschicht B in nichtkonsolidierter Form, welche im gezeigten Beispiel aus mehreren Lagen besteht, in eine erste Heizvorrichtung 4a eingeführt und dort aufgeheizt. Im Wesentlichen gleichzeitig wird eine Deckschicht A in unkonsolidierter Form in eine zweite Heizvorrichtung 4b eingeführt und dort ebenfalls aufgeheizt. Eine weitere, nicht dargestellte Deckschicht A' wird entweder in einer dritten Heizvorrichtung oder unmittelbar anschliessend in der zweiten Heizvorrichtung 4b ebenfalls aufgeheizt. Aus den so gebildeten aufgeheizten Deck- und Kernschichten wird ein heisser Stapel A-B-A' gebildet, der anschliessend in der Pressvorrichtung 6 zu einem flächigen Verbundbauteil verpresst wird. Durch die Verwendung separater Heizvorrichtungen können für die Kernschicht B einerseits und für die Deckschichten A und A' andererseits unterschiedliche Aufheiztemperaturen verwendet werden. Dies erlaubt die Verwendung unterschiedlicher Thermoplastmaterialien in der Kernschicht und in den Deckschichten.

Beispiel 1: Bemerkungen zu maximalen Faseranteilen und Dicken

Die nachfolgende Tabelle zeigt eine Übersicht zusammenhängender Grössen für verschiedene Kombinationen von PP und PEEK als Thermoplasten und Glasfasern (GF) sowie Carbonfasern (CF) als Verstärkungsfasern:

**Tabelle 1**

| Verstärkungsfaser-Gehalt | | | Prozentualer Gewichtsanteil | | | Prozentualer Volumenanteil |
|---|---|---|---|---|---|---|
| | | | 0% | 10% | 90% | 75% |
| PP-GF Dichte | | g/cm3 | 0.9 | 0.963 | 2.187 | 2.187 |
| PP-GF Gewichtsanteil | | - | 0 | 0.1 | 0.897 | 0.897 |
| PP-GF Volumenanteil | | - | 0 | 0.037 | 0.7499 | 0.7499 |
| Dicken bei angegebenen Flächendichten (g/m2) | | | | | | |
| | 300 | mm | **0.33** | **0.31** | **0.14** | **0.14** |
| | 3000 | mm | **3.33** | **3.12** | **1.37** | **1.37** |
| PP-CF Dichte | | g/cm3 | 0.9 | 0.947 | 1.638 | 1.575 |
| PP-CF Gewichtsanteil | | - | 0 | 0.1 | 0.9 | 0.857 |
| PP-CF Volumenanteil | | - | 0 | 0.0526 | 0.8182 | 0.75 |
| Dicken bei angegebenen Flächendichten (g/m2) | | | | | | |
| | 300 | mm | **0.33** | **0.32** | **0.18** | **0.19** |
| | 3000 | mm | **3.33** | **3.17** | **1.83** | **1.90** |
| PEEK-GF Dichte | | g/cm3 | 1.3 | 1.368 | 2.364 | 2.275 |
| PEEK-GF Gewichtsanteil | | - | 0 | 0.1 | 0.9 | 0.857 |
| PEEK-GF Volumenanteil | | - | 0 | 0.526 | 0.8182 | 0.7498 |
| Dicken bei angegebenen Flächendichten (g/m2) | | | | | | |
| | 300 | mm | **0.23** | **0.22** | **0.13** | **0.13** |
| | 3000 | mm | **2.31** | **2.19** | **1.27** | **1.32** |
| PP-GF Dichte | | g/cm3 | 1.3 | 0.9257 | 1.733 | 1.675 |
| PEEK-CF Gewichtsanteil | | - | 0 | 0.1 | 0.9 | 0.806 |
| PEEK-CF Volumenanteil | | - | 0 | 0.0743 | 0.8667 | 0.75 |
| Dicken bei angegebenen Flächendichten (g/m2) | | | | | | |
| | 300 | mm | **0.23** | **0.32** | **0.17** | **0.18** |
| | 3000 | mm | **2.31** | **3.24** | **1.73** | **1.79** |

| Dichte | g/cm3 |
|---|---|
| PP | 0.9 |
| PEEK | 1.3 |
| GF | 2.6 |
| CF | 1.8 |

wobei folgende Berechnungsgrundlagen verwendet wurden:

Volumenanteile:

$$V_F = \frac{W_F}{D_F \cdot \left(\dfrac{W_F}{D_F} + \dfrac{W_P}{D_P}\right)}$$

mit:

VF    Volumenanteil der Fasern
WF    Gewichtsanteil der Fasern
WP    Gewichtsanteil des Polymers
DF    Dichte der Fasern (kg/m3)

DP      Dichte des Polymers (kg/m3)

Dichte:

$$D_C = V_F \cdot D_F + (1 - V_F) \cdot D_P$$

mit:

DC      Dichte des Komposits (kg/m3)

Dicke:

$$t_C = \frac{A_C}{D_C}$$

mit:

tC      Dicke des Komposits (m)
AC      Flächengewicht des Komposits

Es ist zu bemerken, dass die Volumenanteile der Fasern aus geometrischen Gründen bei quadratischer Anordnung maximal 79% und bei hexagonaler Anordnung maximal 91% betragen. In der obigen Tabelle 1 wurde von einem maximalen Faservolumenanteil von 75% ausgegangen.

*Beispiel 2: Verbundbauteil mit konstanter Dicke*

Es wurde ein erfindungsgemässes biegesteifes Verbundbauteil der Schichtenstruktur AB-A hergestellt. Die beiden Deckschichten A wurden aus je einem Faservliesstoff-Zuschnitt mit Carbonfaser-Gewebe und PEI-Thermoplastfasern mit einem Flächengewicht von 440 g/m2 bereitgestellt. Die Kernschicht B wurde aus insgesamt vier Lagen eines Wirrfaservliesstoffes aus Carbonfasern mit PEI-Thermoplastfasern mit einem Flächengewicht von 4 x 500 g/m2 bereitgestellt.
Das daraus hergestellte nichtebene biegesteife Verbundbauteil hatte eine Dicke von ungefähr 4 mm, ein Flächengewicht von 2'880 g/m2 und eine Dichte von 0.7 g/m3.

*Beispiel 3: Verbundbauteil mit unterschiedlich dicken Regionen*

Es wurde ein erfindungsgemässes biegesteifes Verbundbauteil der Schichtenstruktur AB-A hergestellt. Die beiden Deckschichten A wurden aus je einem Faservliesstoff-Zuschnitt mit Carbonfaser-Gewebe und PEI-Thermoplastfasern mit einem Flächengewicht von 440 g/m2 bereitgestellt. Die Kernschicht B wurde aus insgesamt sieben Lagen eines Wirrfaservliesstoffes aus Carbonfasern mit PEI-Thermoplastfasern mit einem Flächengewicht von 7 × 500 g/m2 bereitgestellt.
Das daraus hergestellte biegesteife Verbundbauteil mit Regionen unterschiedlicher Dicke hatte in den stärker konsolidierten Regionen eine Dicke von ungefähr 3.5 mm und in den weniger stark konsolidierten Regionen eine Dicken von ungefähr 8 mm. Das Flächengewicht betrug 4'380 g/m2 und die Dichte betrug 1.26 g/m3 bzw. 0.55 g/m3 in den stark konsolidierten bzw. weniger stark konsolidierten Regionen.

*Beispiel 4: Ergebnisse der Materialprüfung*

Die nachfolgende Tabelle zeigt gemessene mechanische Eigenschaften diverser erfindungsgemässer Verbundbauteile.

**Tabelle 2**

| Schichtenaufbau *) A-B-A | 1 x 2 x 1 x | 1 x 5 x 1 x | 1 x 5 x 1 x | 1 x 5 x 1 x | 1 x 6 x 1 x | 2 x 6 x 2 x |
|---|---|---|---|---|---|---|
| Dichte (g/cm3) | 0.34 | 0.43 | 0.43 | 0.62 | 0.72 | 1.01 |
| Dicke (mm) | 4.9 | 4.9 | 5.7 | 4.86 | 4.87 | 4.54 |
| Flächengewicht (g/m2) | 1'880 | 2'380 | 2'380 | 3'380 | 3'380 | 4'760 |
| Biegesteifigkeit 0º (MPa) | 8.2 | 28.4 | 22.6 | 74 | 94 | 195 |
| Biegesteifigkeit 90º (MPa) | | | | 82 | 164 | 208 |
| Biege-E-Modul 0º (MPa) | 1'351 | 4'285 | 3'100 | 6'381 | 8'245 | 17'173 |
| Biege-E-Modul 90º (MPa) | | | | 8'178 | 12'313 | 18'271 |
| *) Decklagen A mit CF-Gewebe und PEI Matrix, Kernlagen aus CF Wirrfasern und PEI Matrix | | | | | | |

**Patentansprüche**

1. Verfahren zur Herstellung eines flächigen Verbundbauteils mit einer zwischen zwei Deckschichten (A, A') angeordneten und stoffschlüssig damit verbundenen Kernschicht (B), wobei die Deckschichten einen Deckschicht-Thermoplasten enthalten und wobei die Kernschicht einen Kernschicht-Thermoplasten enthält, und wobei das Verfahren die folgenden Schritte umfasst:

   a) es werden entsprechende Zuschnitte der beiden Deckschichten und der Kernschicht bereitgestellt und daraus ein auf eine Temperatur oberhalb der Schmelztemperatur sowohl des Deckschicht-Thermoplasten wie auch des Kernschicht-Thermoplasten aufgeheizter Stapel der Schichtenfolge A-B-A' gebildet;
   b) der aufgeheizte Stapel (A-B-A') wird verpresst;
   c) der verpresste Stapel wird abgekühlt, wobei das flächige Verbundbauteil mit konsolidierten und stoffschlüssig miteinander verbundenen Schichten gebildet wird;

   **dadurch gekennzeichnet, dass**

   - im Schritt a) die anfänglich bereitgestellten Zuschnitte der beiden Deckschichten (A, A') in unkonsolidierter flexibler Form vorgelegt werden, wobei mindestens eine Deckschicht (A) eine unkonsolidierte flexible Faservliesstoffschicht (C) aus 10 bis 100 Gew.% Thermoplastfasern des Deckschicht-Thermoplasten und 0 bis 90 Gew.% Verstärkungsfasern umfasst, welche ein Flächengewicht von 300 bis 3'000 g/m$^2$ aufweist, und dass
   - im Schritt a) die anfänglich bereitgestellten Zuschnitte der Kernschicht (B) mindestens eine aus Verstärkungsfasern und Thermoplastfasern des Kernschicht-Thermoplasten gebildete Wirrfaservliesstoffschicht (D) umfassen, welche ein Flächengewicht von 500 bis 10'000 g/m$^2$ aufweist, und dass
   - nach dem Schritt c) die konsolidierte(n) Deckschicht(en) einen Luftporengehalt < 5 Vol.-% und die konsolidierte Kernschicht einen Luftporengehalt von 20 bis 80 Vol-% aufweisen.

2. Verfahren nach Anspruch 1, wobei die im Schritt a) bereitgestellte Wirrfaservliesstoffschicht (D) der Kernschicht (B) genadelt ist.

3. Verfahren nach Anspruch 1 oder 2, wobei der Deckschicht-Thermoplast und der Kernschicht-Thermoplast unabhängig ausgewählt sind aus PP, PEI, PEEK, PPS, PA, PEAK, PEKK und PC.

4. Verfahren nach einem der Ansprüche 1 bis 3, wobei die Verstärkungsfasern ausgewählt sind aus Carbonfasern, Glasfasern, Aramidfasern, Basaltfasern und hochschmelzenden Thermoplastfasern.

5. Verfahren nach einem der Ansprüche 1 bis 4, wobei im Schritt a) die Zuschnitte der beiden Deckschichten (A, A') und der Kernschicht (B) in kaltem Zustand mit der Schichtenfolge A-B-A' aufeinandergestapelt werden und der so gebildete Stapel (AB-A') auf eine Temperatur oberhalb der Schmelztemperatur sowohl des Deckschicht-Thermoplasten wie auch des Kernschicht-Thermoplasten aufgeheizt wird, wobei ein aufgeheizter Stapel (A-B-A') gebildet wird, um daraufhin den Verpressungsschritt b) durchzuführen.

6. Verfahren nach Anspruch 5, wobei der Deckschicht-Thermoplast und der Kernschicht-Thermoplast identisch sind.

7. Verfahren nach einem der Ansprüche 1 bis 4, wobei im Schritt a) die Zuschnitte der Kernschicht (B) und der Deckschichten (A, A') unabhängig voneinander auf eine Temperatur oberhalb der Schmelztemperatur des betreffenden Thermoplasten aufgeheizt werden und danach in aufgeheiztem Zustand mit der Schichtenfolge A-B-A' aufeinandergestapelt werden, wobei ein aufgeheizter Stapel (A-B-A') gebildet wird, um daraufhin den Verpressungsschritt b) durchzuführen.

8. Verfahren nach einem der Ansprüche 1 bis 7, wobei die mindestens eine Deckschicht (A) in unkonsolidierter Form eine mit der Faservliesstoffschicht (C) vernadelte, vernähte oder thermisch verbundene Gewebe- oder Gelegeschicht (E) aus Verstärkungsfasern mit einem Flächengewicht von 100 bis 2'000 g/m$^2$ aufweist.

9. Verfahren nach Anspruch 8, wobei die mindestens eine Deckschicht (A) mehrere Gewebe- oder Gelegeschichten (E1, E2, etc.) aus unterschiedlichen Verstärkungsfasermaterialien aufweist.

10. Verfahren nach einem der Ansprüche 1 bis 9, wobei die Kernschicht (B) in unkonsolidierter Form mindestens eine weitere, an die Wirrfaservliesstoffschicht (D) angrenzende Strukturschicht (F), insbesondere eine weitere Wirrfaservliesstoffschicht mit unterschiedlichem Verstärkungsfaseranteil oder eine Bienenwaben- oder Schaumstoffschicht, aufweist.

11. Verfahren nach Anspruch 10, wobei die Strukturschicht (F) nur in ausgewählten Regionen der Kernschicht vorgesehen ist.

12. Verfahren nach einem der Ansprüche 1 bis 11, wobei das Verpressen des aufgeheizten Stapels (A-B-A') in einem nicht-planaren Presswerkzeug durchgeführt wird.

13. Verfahren nach Anspruch 1 oder 2, wobei der Deckschicht-Thermoplast und der Kernschicht-Thermoplast PEEK sind und wobei die Verstärkungsfasern Carbonfasern sind, und wobei die konsloidierten Deckschichten (A, A') eine Dichte von 1.0 bis 2.0 g/cm$^3$, insbesondere von 1.3 bis 1.8 g/cm$^3$, aufweisen und die konsolidierte Kernschicht (B) eine Dichte von 0.2 bis 1.0 g/cm$^3$, insbesondere von 0.3 bis 0.6 g/cm$^3$, aufweist.

14. Verfahren nach Anspruch 1 oder 2, wobei der Deckschicht-Thermoplast und der Kernschicht-Thermoplast PEI sind und wobei die Verstärkungsfasern Carbonfasern sind, und wobei die konsolidierten Deckschichten (A, A') eine Dichte von 1.0 bis 2.0 g/cm$^3$, insbesondere von 1.3 bis 1.8 g/cm$^3$, aufweisen und die konsolidierte Kernschicht (B) eine Dichte vor 0.2 bis 1.0 g/cm$^3$, insbesondere von 0.3 bis 0.6 g/cm$^3$, aufweist.

15. Verwendung eines flächigen Verbundbauteils, welches mit einem Verfahren nach einem der vorangehenden Ansprüche hergestellt wurde, in der Luftfahrt oder im Fahrzeugbau.

**Claims**

1. A method for producing a planar composite component having a core layer (B), which is arranged between and integrally bonded to two cover layers (A, A'), wherein the cover layers contain a cover-layer thermoplastic and wherein the core layer contains a core-layer thermoplastic, and wherein the method comprises the following steps:

   a) providing corresponding pre-cut parts of the two cover layers and of the core layer and forming therefrom a stack with layer sequence A-B-A which is heated to a temperature above the melting temperature of both the cover-layer thermoplastic and the core-layer thermoplastic;
   b) the heated stack (A-B-A') is pressed;
   c) the pressed stack is cooled, whereby the planar composite component with consolidated layers integrally bonded to each other is formed;

   **characterized in that**

- in step a) the initially provided pre-cut parts of the two cover layers (A, A') are provided in unconsolidated flexible form, at least one cover layer (A) comprising an unconsolidated flexible fibrous nonwoven layer (C) of 10 to 100 wt.-% thermoplastic fibers of the cover-layer thermoplastic and 0 to 90 wt.-% of reinforcing fibers having an areal weight of 300 to 3'000 g/m$^2$, and that

- in step a) the initially provided pre-cut parts of the core layer (B) comprise at least one randomly-oriented-fiber nonwoven layer (D) formed from reinforcing fibers and thermoplastic fibers of the core-layer thermoplastic having an areal weight of 500 to 10'000 g/m$^2$, and that

- after step c) the consolidated cover layer(s) has / have an air pore content of < 5 vol.-% and the consolidated core layer has an air pore content of 20 to 80 vol-%.

2. The method according to claim 1, wherein the randomly-oriented-fiber nonwoven layer (D) of the core layer (B) provided in step a) is needled.

3. The method according to claim 1 or 2, wherein the cover-layer thermoplastic and the core-layer thermoplastic are independently selected from PP, PEI, PEEK, PPS, PA, PEAK, PEKK and PC.

4. The method according to one of claims 1 to 3, wherein the reinforcing fibers are selected from carbon fibers, glass fibers, aramid fibers, basalt fibers, and high-melting thermoplastic fibers.

5. The method according to one of claims 1 to 4, wherein in step a) the pre-cut parts of the two cover layers (A, A') and the core layer (B) are stacked onto each other in the cold state with layer sequence A-B-A', and the stack (A-B-A') thus formed is heated to a temperature above the melting temperature of both the cover-layer thermoplastic and the cover-layer thermoplastic, whereby a heated stack (A-B-A') is formed to then carry out the pressing step b).

6. The method according to claim 5, wherein the cover-layer thermoplastic and the core-layer thermoplastic are identical.

7. The method according to one of claims 1 to 4, wherein in step a) the pre-cut parts of the core layer (B) and of the cover layers (A, A') are heated independently of one another to a temperature above the melting temperature of the corresponding thermoplastic, and then stacked onto each other in the heated state with layer sequence A-B-A, whereby a heated stack (A-B-A') is formed to then carry out the pressing step b).

8. The method according to one of claims 1 to 7, wherein the at least one cover layer (A) in unconsolidated form comprises a woven layer or an oriented-fiber layer (E) comprising reinforcing fibers, which has an areal weight of 100 to 2'000 g/m$^2$ and which is needled, stitched or thermally connected to the fibrous nonwoven layer (C).

9. The method according to claim 8, wherein the at least one cover layer (A) comprises several woven layers or oriented-fiber layers (E1, E2, etc.) comprising different reinforcing fiber materials.

10. The method according to one of claims 1 to 9, wherein the core layer (B) in unconsolidated form comprises at least one further structural layer (F) which is adjacent to the randomly-oriented-fiber nonwoven layer (D), in particular a further randomly-oriented-fiber nonwoven layer with a different content of reinforcing fibers or else a honeycomb layer or a foamed plastic layer.

11. The method according to claim 10, wherein the structural layer (F) is provided only in selected regions of the core layer.

12. The method according to one of claims 1 to 11, wherein the pressing of the heated stack (A-B-A') is carried out in a non-planar pressing tool.

13. The method according to claim 1 or 2, wherein the cover-layer thermoplastic and the core-layer thermoplastic are PEEK, and wherein the reinforcing fibers are carbon fibers, and wherein the consolidated cover layers (A, A') have a density of 1.0 to 2.0 g/cm$^3$, particularly of 1.3 to 1.8 g/cm$^3$, and wherein the consolidated core layer (B) has a density of 0.2 to 1.0 g/cm$^3$, particularly of 0.3 to 0.6 g/cm$^3$.

14. The method according to claim 1 or 2, wherein the cover-layer thermoplastic and the core-layer thermoplastic are PEI, and wherein the reinforcing fibers are carbon fibers, and wherein the consolidated cover layers (A, A') have a density of 1.0 to 2.0 g/cm$^3$, particularly of 1.3 to 1.8 g/cm$^3$, and wherein the consolidated core layer (B) has a density of 0.2 to 1.0 g/cm$^3$, particularly of 0.3 to 0.6 g/cm$^3$.

15. Use of a planar composite component produced with a method according to one of the preceding claims in aeronautic or automotive manufacturing.

**Revendications**

1. Procédé de fabrication d'un composant composite plat ayant une couche centrale (B) entre deux couches de couverture (A, A'), reliée par la matière à celles-ci,

 les couches de couverture comportant un thermoplastique de couche de couverture, et
 la couche centrale comportant un thermoplastique de couche centrale, et le procédé comprend les étapes suivantes consistant à :

 a) fournir des découpes correspondant aux deux couches de couverture et à la couche centrale et former un empilage selon l'ordre de couches (A-B-A'), chauffé à une température supérieure à la température de fusion à la fois du thermoplastique de couche de couverture et du thermoplastique de couche centrale,
 b) comprimer l'empilage chauffé (A-B-A'),
 c) refroidir l'empilage comprimé, le composant composite plat étant formé des couches consolidées et reliées entre elles par une liaison par la matière,

 procédé **caractérisé en ce que**

 - dans l'étape a) les découpes fournies initialement des deux couches de couverture (A, A') sont présentées sous une forme flexible non consolidée, au moins une couche de couverture (A) comprenant une couche non-tissée de fibres, flexible, non consolidée (C) comprenant entre 10 à 100% pondéraux de fibres thermoplastiques du thermoplastique de couverture et entre 0 et 90% pondéraux de fibres de renforcement, ayant une densité surfacique comprise entre 300 et 3000 g/m$^2$, et
 - dans l'étape a) les découpes de la couche centrale (B) fournies initialement comprennent au moins une couche non-tissée, de fibres emmêlées (D), formée de fibres de renforcement et de fibres du thermoplastique de la couche centrale, et ayant une densité surfacique comprise entre 500 et 10.000 g/m$^2$, et
 - après l'étape c), la ou les couches de couverture consolidées ont une teneur en pores d'air <5% volumiques et la couche centrale consolidée a une teneur en pores d'air comprise entre 20 et 80% volumiques.

2. Procédé selon la revendication 1,
 selon lequel
 la couche non-tissée de fibres emmêlées (D) fournie dans l'étape a) de la couche centrale (B) est aiguilletée.

3. Procédé selon la revendication 1 ou 2,
 selon lequel
 le thermoplastique de couche de couverture et le thermoplastique de couche centrale sont choisies indépendamment l'un de l'autre parmi PP, PEI, PEEK, PPS, PA, PEAK, PEKK et PC.

4. Procédé selon l'une des revendications 1 à 3,
 selon lequel
 les fibres de renfort sont choisies parmi : fibres de carbone, fibres de verre, fibres aramides, fibres de basalte, fibres thermoplastiques à point de fusion élevé.

5. Procédé selon l'une des revendications 1 à 4, selon lequel

 dans l'étape a), les découpes des deux couches de couverture (A, A') et de la couche centrale (B) à l'état froid sont empilées les unes sur les autres selon l'ordre de couches (A-B-A') et l'empilage ainsi formé (A-B-A') est chauffé à une température supérieure à la température de fusion à la fois du thermoplastique de couche de couverture et du thermoplastique de couche centrale,
 on forme un empilage (A-B-A') chauffé pour effectuer ensuite l'étape de compression (b).

6. Procédé selon la revendication 5,
 selon lequel
 le thermoplastique de couche de couverture et le thermoplastique de couche centrale sont identiques.

**7.** Procédé selon l'une des revendications 1 à 4,
selon lequel
dans l'étape a) la couche centrale (B) et les couches de couverture (A, A') sont chauffées indépendamment l'une de l'autre à une température au-dessus de la température de fusion du thermoplastique concerné et ensuite, à l'état chauffé, on les empile selon l'ordre d'empilage (A-B-A'), en formant un empilage chauffé (A-B-A') pour effectuer ensuite l'étape de compression b).

**8.** Procédé selon l'une des revendications 1 à 7,
selon lequel
au moins la couche de couverture (A) à l'état non consolidé comporte, une couche tissée ou nappe (E) formée de fibres de renforcement avec une densité surfacique de 100 à 2000 g/m$^2$, reliée à la couche non-tissée de fibres (C), par aiguilletage, couture ou liaison thermique.

**9.** Procédé selon la revendication 8,
selon lequel
au moins la couche de couverture (A) comporte plusieurs couches tissées ou nappes (E1, E2, etc.) en différentes matières de fibres de renforcement.

**10.** Procédé selon l'une des revendications 1 à 9,
selon lequel
la couche centrale (B) à l'état non-consolidé comporte au moins une autre couche de structure (F) adjacente à la couche non-tissée de fibres emmêlées (D) notamment une autre couche non-tissée de fibres emmêlées avec une teneur différente de fibres de renforcement ou une couche en nids d'abeille ou en matière expansée.

**11.** Procédé selon la revendication 10,
selon lequel
la couche de structure (F) n'est prévue que dans des régions sélectionnées de la couche centrale.

**12.** Procédé selon l'une des revendications 1 à 11,
selon lequel
on comprime l'empilage de couches chauffées (A-B-A') dans une presse non plane.

**13.** Procédé selon l'une des revendications 1 ou 2,
selon lequel

le thermoplastique de couche de couverture et le thermoplastique de couche centrale sont en PEEK et les fibres de renfort sont des fibres de carbone, et
les couches de couverture (A, A') consolidées ont une densité comprise entre 1,0-2,0 g/cm$^3$, notamment comprise entre 1,3-1,8 g/cm$^3$, et
la couche centrale (B) consolidée a une densité comprise entre 0,2-1,0 g/cm$^3$ notamment comprise entre 0,3-0,6 g/cm$^3$.

**14.** Procédé selon la revendication 1 ou 2,
selon lequel

le thermoplastique de couche de couverture et le thermoplastique de couche centrale sont du PEI et les fibres de renforcement sont des fibres de carbone, et
les couches de couverture (A, A') consolidées ont une densité comprise entre 1,0-2,0 g/cm$^3$, en particulier comprise entre 1,3-1,8 g/cm$^3$ et la couche centrale (B) consolidée a une densité comprise entre 0,2-1,0 g/cm$^3$ notamment comprise entre 0,3-0,6 g/cm$^3$.

**15.** Application d'un composant composite, plat, fabriqué selon un procédé de l'une des revendications précédentes, à l'aéronautique et la construction automobile.

Fig. 1

Fig. 2

Fig. 3

Fig. 4

Fig. 5

EP 3 606 742 B1

Fig. 6

Fig. 7

Fig. 8

EP 3 606 742 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015117799 A1
- WO 2006133586 A1
- WO 2006105682 A1
- DE 19520477 A1
- WO 2006111037 A1